# EUROPEAN PATENT APPLICATION

(11) **EP 2 348 358 A1**
(43) Date of publication of application: **27.07.2011**
(21) Application number: 10151212.7
(22) Date of filing: 20.01.2010
(51) Int. Cl.: G03B 21/58, F16M 11/32

(54) **Foldable tabletop projector screen support**

(71) Applicant: SMS Smart Media Solutions AB, 131 30 Nacka (SE)
(72) Inventor: Åstradsson, Petter, 185 39, Vaxholm (SE)
(74) Representative: Janson, Ronny

(57) **Abstract**

A foldable tabletop projector screen support (1) is described. The support comprises leg means for arrangement of the support (1) on a surface and screen holding means arranged to hold the screen. The support comprises a base part (2) with a length axis (9) an upper end (12) and a lower end (13), and at least one extensible-contractible rod (10, 11) which in its contracted state is at least partly enclosed by the base part (2) and which in its extended state extends from the upper end of the base part (2) to an outer end. The leg means comprises at least one leg (3-5) with a length axis (6-8), which leg (3-5) is arranged rotatable in relation to the base part (2). The length axis (6-8) of each leg (3-5), in the folded state of the support (1), is essentially parallel to the length axis (6-8) of the base part (2). The screen holding means are arranged in the outer ends of said at least one rod (10, 11).

## Description

### Technical field

The present invention relates to a foldable support for a projector screen. More specifically the present invention relates to a foldable tabletop support for a projector screen for use together with primarily small projectors. Such small projectors may for example be found integrated into cellular phones.

### Description of the prior art

When presenting information stored in a computer it is possible to connect the computer to a projector which projects the desired information on a screen. Such projectors are normally similar in size to laptop computers. The projectors have traditionally been used together with full size projector screens or whiteboards. In many instances the presentation must take place in a place where there is no projector screen or whiteboard available. In such instances the person giving the presentation at a meeting will not only have to bring a computer and a projector to the presentation but will also have to bring some sort of projector screen to the meeting. In recent years increasingly small projectors and computers have been put on the market. The cellular phones of today are approaching small computers. It is even possible to purchase cellular phones having an integrated projector. With such a cellular phone the problem of bringing a computer as well as a projector to a meeting, may be circumvented. This does, however, not solve the problem with the projector screen, which still has to be provided in some way at the location for the presentation.

The German Gebrauchsmusterschrift DE 203 02 079 describes a mobile radio device with an integrated projector and a foldable screen. A number of different embodiments of such a device are shown.

The Japanese Patent Publication 2000-356808 describes a solution to enable sound to be produced from a display surface itself in which a picture is displayed and to enhance the feeling of unity between the sound and the video. According to the publication a sheet of paper is elastically deformed so as to be provided with internal stress and supported at two points by the tip of a supporting member and a clipping part. The support shown in said Japanese Patent Publication is, however, not foldable.

### Summary of the invention

An object of the present invention is to provide a foldable tabletop projector screen support which is an alternative to the supports of the prior art.

Another object of the present invention is to provide a foldable tabletop projector screen support, which may be used with an ordinary white paper as the projector screen.

A further object of the present invention is to provide a foldable tabletop projector screen support, which in its folded state is compact and easily portable.

At least one of the above objects are fulfilled with a foldable tabletop projector screen support according to claim 1.

Further advantages of the invention are provided with the features of the dependent claims.

A foldable tabletop projector screen support according to the present invention comprises leg means for arrangement of the support on a surface, and screen holding means arranged to hold the screen. The support is **characterized in that** it comprises a base part with a length axis, an upper end and a lower end, and at least one extensible-contractible rod which in its contracted state is at least partly enclosed by the base part and which in its extended state extends from the upper end of the base part to an outer end. The leg means comprises at least one leg with a length axis, which leg is arranged rotatable in relation to the base part. The length axis of each leg, in the folded state of the support, is essentially parallel to the length axis of the base part. The screen holding means comprises a clip arranged in the outer end of the extensible-contractible rod.

A support according to the present invention is compact and easily portable in its folded state. Furthermore, the screen holding means may be adapted to hold an ordinary sheet of paper such as printer papers. As such papers a readily available at almost any office, the need to bring a special screen is dispensed with.

The support may be adapted to be arranged on the surface with the base part and the at least one leg in contact with the surface. By using the base part as part of the leg means the number of legs may be minimized.

Preferably, the leg means in the foldable tabletop projector screen support comprises at least three legs. This provides for easy manufacturing of a stable support. In many ways three legs are the preferred number of legs. Even though a larger number of legs may lead to a more stable support it also increases the complexity of the support. With more than three legs it is more difficult to make sure that all legs are in contact with the surface simultaneously.

In the folded state of the support the legs may extend below the lower end of the base part and the lower end of the extensible-contractible rods in their folded state. Thus, the outer shape of the folded support may be arranged to be dependent only on the shape of the legs.

The legs may be arranged rotatable in relation to the upper end of the base part. Alternatively, the legs may be arranged rotatable in relation to the lower end of the base. In the latter case the legs are rotated at least 90 degrees between their folded state and their unfolded state. This is advantageous in that it leads to a higher possible unfolded support for a given length of the folded support. Due to strength and design considerations it is, however, in most cases preferable to have the legs rotatable in relation to the upper end of the base part.

The foldable tabletop projector screen support may be arranged so that the legs, in the folded state of the support, essentially form a shell enclosing the base part and the extensible-contractible rods in their contracted state. This is advantageous for many reasons. Firstly, such a shell makes it possible to achieve a smooth outer surface of the support. Secondly, such a shell protects the support from being damaged during transport.

The foldable tabletop projector screen support may be arranged so that said screen holding means, in the folded state of the support, forms a continuation of the shell formed by the legs. This further facilitates the construction of the support to have a smooth outer surface.

With the above considerations regarding the legs and the screen holding means the support may be designed to essentially have, in its folded state, the shape of a cigar.

The foldable tabletop projector screen support may comprise at least two extensible-contractible rods which in their extended state are rotatable in relation to the upper end of the base part. Such a design facilitates the arrangement of a sheet of paper in the screen holding means.

The total height of the support from the lower end of the legs to the clips may be at least 150 millimetres. This enables the use of an A5 sheet of paper as the screen. Preferably, the total height is made sufficiently high to allow a sheet of paper being used without coming into contact with the legs. The total height of the support from the lower end of the legs to the clips is preferably in the interval 210-500 millimetres. This makes it possible to use the size of papers that are normally available at offices.

To provide further protection for the rods in their contracted state the base part may form a housing enclosing the extensible-contractible rods in their contracted state.

The screen holding means may comprise a clip arranged in the outer end of each one of the extensible-contractible rods. Such clips at the end of the rods may be arranged to hold an ordinary sheet of paper. This may be achieved in many different ways.

As an alternative to clips the screen holding means may comprise plates arranged in the outer end of each one of the extensible-contractible rods, on which plates a sheet of paper may be fastened using adhesive means, such as tape or glue.

In the following preferred embodiments of the invention will be described with reference to the appended drawings.

### Short description of the drawings

Fig 1 shows a foldable tabletop projector screen support, according to an embodiment of the present invention, in its folded state.
Fig 2 shows the support of Fig 1 in a partly unfolded state.
Fig 3 shows the support of Fig 1 and Fig 2 in a fully unfolded state, in which an ordinary piece of paper is arranged on the support.

### Description of preferred embodiments of the invention

In the following description of preferred embodiments of the invention similar elements or features in different figures will be denoted with the same reference numeral. It is to be noted that the drawings are not drawn to scale.

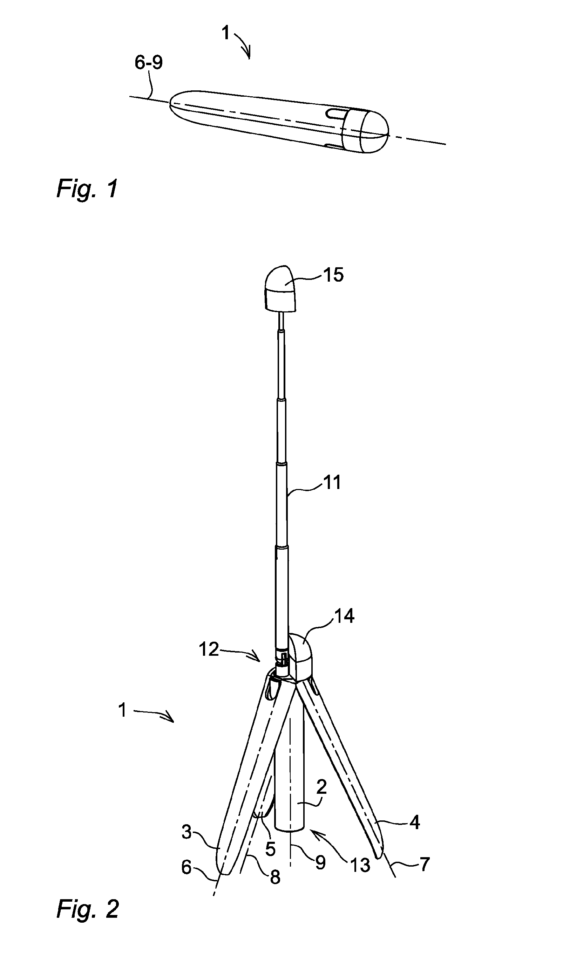

Fig 1 shows a foldable tabletop projector screen support 1, according to an embodiment of the present invention, in the folded state of the support 1. Fig 2 shows the support 1 of Fig 1 in a partly unfolded state. The support 1 comprises a base part 2, with a length axis 9, and three legs 3-5, with length axes 6-8, which are arranged rotatable in relation to the upper part of the base part 2. As is shown in Fig 2 the three legs 3-5 have been unfolded to enable a stable arrangement of the support 1 on a surface 20. The support 1 also comprises two extensible-contractible rods 10, 11, of which one rod 11 has been extended in the shown embodiment. In the shown embodiment the base part 2 has the form of a housing which encloses the rods 10, 11, in their contracted state. The base part 2 has an upper end 12, and a lower end 13. Clips 14, 15, are arranged in the outer ends of the rods 10, 11, which clips 14, 15, are arranged for holding a sheet of paper to be used as the projector screen. In the folded state of the support 1 the length axes 6-8 of the legs 3-5 are essentially parallel to the length axis 9 of the base part 2 as is shown in Fig 1. As is also evident from Fig 1 and Fig 2 the legs extend below the lower end 13 of the base part. The rods 10, 11, are arranged rotatable in relation to the upper end 12 of the base part 2. They are, however, only rotatable in their fully extended state.

As is shown in Fig 1 the legs form a shell enclosing the base part 2 and the extensible-contractible rods 10, 11, in their contracted state. The clips 14, 15, form a continuation of the shell so that the folded support 1 essentially has the shape of a cigar.

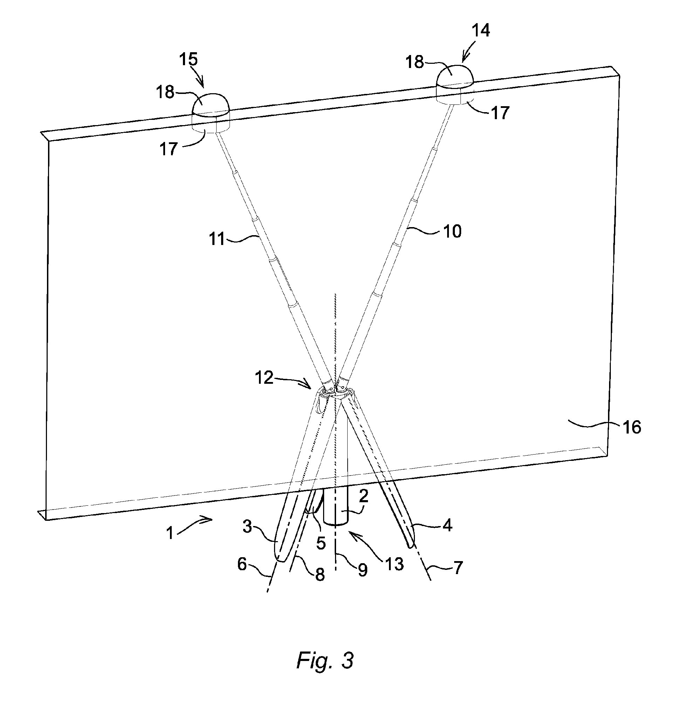

Fig 3 shows the support of Fig 1 and Fig 2 in a fully unfolded state, in which an ordinary sheet of paper 16 is arranged fastened to the clips 14, 15. As is shown in Fig 3 the rods 10, 11, have been rotated after being fully contracted from the base part 2, so that the rods form an angle with the length axis 9 of the base part 2. The clips 14, 15, may be any type of clips suitable for holding a sheet of paper. In the embodiment shown in Fig 3 the clips have a lower part 17 and an upper part 18. The upper part 18 is spring loaded towards the lower part 17. The sheet of paper shown in Fig 3 is an ordinary white A4 sheet which is 210 millimetres on the short side. The total height of the support 2 has to be about 210 millimetres in order to allow such an A4 sheet to be held in the shown position. This means that the folded support 2 may have a total length of about 100 millimetres or less in order to be able to hold an A4 sheet in the shown position. Depending on the size of the paper that is to be used the total height may have to be larger. To be able to use A2 sheets the support 1 have to be at least about 420 millimetres. In most offices no papers larger than A3 are normally used. This would require a total height of the support of at least about 300 millimetres.

The described embodiments may be modified in many ways without departing from the spirit and scope of the present invention which is limited only by the appended claims.

It is possible to have another number of legs than three. It is not necessary to have the legs arranged rotatable around the upper end of the base part. They may be arranged rotatable around the lower end of the base part.

## Claims

1. A foldable tabletop projector screen support (1) comprising leg means for arrangement of the support (1) on a surface (20), and screen holding means arranged to hold the screen, **characterized in that** it comprises a base part (2) with a length axis (9), an upper end (12) and a lower end (13), and at least one extensible-contractible rod (10, 11) which in its contracted state is at least partly enclosed by the base part (2) and which in its extended state extends from the upper end of the base part (2) to an outer end (21, 22), wherein the leg means comprises at least one leg (3-5) with a length axis (6-8), which leg (3-5) is arranged rotatable in relation to the base part (2), wherein the length axis (6-8) of each leg (3-5), in the folded state of the support (1), is essentially parallel to the length axis (6-8) of the base part (2), and wherein the screen holding means are arranged in the outer ends (21,22) of said at least one rod (10, 11).

2. The foldable tabletop projector screen support (1) according to claim 1, wherein the support (1) is adapted to be arranged on the surface (20) with the base part (2) and the at least one leg (3-5) in contact with the surface (20).

3. The foldable tabletop projector screen support (1) according to claim 1, wherein the leg means comprises at least three legs (3-5).

4. The foldable tabletop projector screen support (1) according to claim 3, wherein the legs (3-5) in the folded state of the support (1) extend below the lower end (13) of the base part (2) and the lower end of the extensible-contractible rods (10, 11) in their folded state.

5. The foldable tabletop projector screen support (1) according to claim 3 or 4, wherein the legs (3-5) are arranged rotatable in relation to the upper end (12) of the base part (2).

6. The foldable tabletop projector screen support (1) according to anyone of claims 3-5, wherein the legs (3-5), in the folded state of the support (1), essentially form a shell enclosing the base part (2) and the extensible-contractible rods (10, 11) in their contracted state.

7. The foldable tabletop projector screen support (1) according to claim 6, wherein said screen holding means, in the folded state of the support (1), forms a continuation of the shell formed by the legs (3-5).

8. The foldable tabletop projector screen support (1) according to claim 7, wherein the support (1) in its folded state essentially has the shape of a cigar.

9. The foldable tabletop projector screen support (1) according to anyone of the preceding claims, comprising at least two extensible-contractible rods (10, 11) which in their extended state are rotatable in relation to the upper end (12) of the base part (2).

10. The foldable tabletop projector screen support (1) according to anyone of the preceding claims, wherein the total height of the support (1) from the outer end of the legs (3-5) to the screen holding means is at least 150 millimetres.

11. The foldable tabletop projector screen support (1) according to claim 10, wherein the total height of the support from the outer end of the legs (3-5) to the screen holding means is in the interval 150-500 millimetres.

12. The foldable tabletop projector screen support (1) according to anyone of the preceding claims, wherein the base part (2) forms a housing enclosing the extensible-contractible rods (10, 11) in their contracted state.

13. The foldable tabletop projector screen support (1) according to anyone of the preceding claims, wherein the screen holding means comprises a clip (14, 15) arranged in the outer end (21, 22) of each one of the extensible-contractible rods (10,11).

14. The foldable tabletop projector screen support (1) according to claim 13, wherein said clips (14, 15) at the end of the rods (10, 11) are arranged to hold an ordinary sheet of paper (16).

15. The foldable tabletop projector screen support (1) according to anyone claims 1-13, wherein the screen holding means comprises plates arranged in the outer end (21, 22) of each one of the extensible-contractible rods (10, 11), on which plates a sheet of paper may be fastened using adhesive means.
